# EUROPEAN PATENT SPECIFICATION

(11) **EP 2 472 165 B1**
(45) Date of publication and mention of the grant of the patent: **21.05.2014**
(21) Application number: 10197377.4
(22) Date of filing: 30.12.2010
(51) Int. Cl.: F16L 59/14, F16L 59/15, F17D 1/00, F17D 1/08

(54) **Cryogenic fluid transfer tunnel assembly and method**
Transfertunnelanordnung und Verfahren für kryogene Flüssigkeit
Ensemble de tunnel et procédé pour transfert de fluides cryogéniques

(43) Date of publication of application: 04.07.2012
(73) Proprietor: Shell Internationale Research Maatschappij B.V., 2596 HR The Hague (NL)
(72) Inventor: Kumar, Rakesh, Bangalore 560048 (IN); Said, Micael George, Bangalore 560048 (IN)
(74) Representative: Matthezing, Robert Maarten

(56) References cited:
- FR-A- 1 363 509
- FR-A- 1 423 113
- US-A- 3 433 028
- US-A- 3 565 118
- US-A- 4 826 354
- US-A1- 2007 095 427
- US-A1- 2009 077 982

## Description

The present invention relates to a cryogenic fluid transfer tunnel, such as a liquefied natural gas (LNG) transfer tunnel, a method of installing such a tunnel, and a method of cooling a cryogenic fluid carrier line in such a tunnel. The invention further relates to the use of such a cryogenic fluid transfer tunnel in transporting LNG between a liquefaction facility and an export terminal or an import terminal and a regasification facility.

Natural gas is a useful fuel source, as well as being a source of various hydrocarbon compounds. It is often desirable to liquefy natural gas in a liquefaction facility at or near the source of a natural gas stream for a number of reasons. As an example, natural gas can be stored and transported over long distances more readily as a liquid than in gaseous form because it occupies a smaller volume and may not need to be stored at high pressures. Such liquefied natural gas can be stored at atmospheric pressure if maintained at cryogenic temperatures, such as at -160 °C or below. Alternatively, liquefied natural gas may be stored at temperatures above -160 °C if it is pressurised above atmospheric pressure.

The long distance transport of LNG may be carried out in a suitable LNG carrier, particularly a carrier vessel, such as an ocean-going tanker having one or more cryogenic storage tanks to maintain the LNG in a liquefied state. The carrier vessel may be supplied with LNG via a loading arm or hose from a LNG export terminal, which is connected to the liquefaction facility by one or more cryogenic fluid carrier lines. As used herein, the terms 'line' and 'pipeline' should be interpreted as equivalent and interchangeable.

After transport to the desired destination, LNG can be transferred from the LNG carrier vessel via an off-loading arm at a LNG import terminal. The LNG import terminal can supply LNG to a regasification facility via one or more LNG cryogenic fluid carrier lines. The regasification facility pressurises and vaporises LNG so that pressurised natural gas can be injected into a gas network at ambient temperature. If desired, a selected amount of one or more additional components, for example nitrogen, can be added at the regasification facility to obtain natural gas having a desired gas quality, for example a selected heating value (i.e. energy content when the natural gas is burned), according to gas specifications or the requirements of a consumer. Furthermore, the heating value of the natural gas may also be adjusted by removing or adding a desired amount of heavier hydrocarbons from natural gas.

LNG import and export terminals for LNG carrier vessels must be located at an on-shore jetty or off-shore, such as a distance of from a few hundred meters to more than a kilometre off-shore, depending upon the coastal water depth and local conditions, to allow access for the LNG carrier vessel to the terminal.

The LNG cryogenic fluid carrier line should maintain the LNG in a liquefied state while it is pumped between the facility and the terminal or vice versa. These carrier lines are normally insulated cryogenic pipelines supported on trestles formed of piles and concrete decking. The trestles may also carry ancillary lines, such as cryogenic fluid recirculation lines, vapour return lines, instrumentation lines and power lines. Each trestle may have a footprint many meters wide, typically greater than 4 m, for instance in the range of 4 m to 6 m.

It will be apparent that the cryogenic fluid carrier line connecting the facility and terminal will run on land from the facility to the shore and may have an offshore portion.

US patent 4,826,354 discloses an underwater LNG pipeline system extending from a shore-based LNG storage tank to an offshore loading facility. This underwater LNG pipeline system consists of steel jacketed LNG pipelines connected together by braces. Each of the pipelines consist of an inner pipe that is constructed out of a cryogenic material. Insulation surrounds the inner pipe to reduce heat loss. A concrete coating may be provided.

In planning such cryogenic fluid carrier lines, the economic and environmental impact should be considered, both during installation and throughout the life of the pipeline. For instance, the total area of the on-shore land required to accommodate the associated trestle, together with an appropriate safety zone around the footprint of the trestle may be large. This may lead to significant CAPEX expenditure to purchase the requisite land, and impact the local population if the line and trestle may run through populated areas.

Furthermore, installation of an over-sea or sub-sea pipeline may affect a local ecosystem, for example when the supporting trestles are constructed for an over-sea pipeline or when a sub-sea pipeline is laid on the sea bed. Furthermore, the local economy may be affected by disruption to fisheries and (water) traffic, which may have to avoid the area around the pipeline. In addition, the line may also have to be modified to withstand the prevailing sea conditions. For instance the trestle may have to be strengthened and the cryogenic fluid carrier line rendered resistant to the corrosive properties of salt water. In arctic areas, the costs of constructing and maintaining trestles will increase even more.

There is thus a need to provide an alternative to such cryogenic fluid carrier lines which mitigates these problems, allowing installation and operation with a reduced environmental and economic impact to the surrounding area.

In a first aspect the present invention provides a cryogenic fluid transfer tunnel assembly, comprising a lining jacket comprising within
- a cryogenic fluid carrier line;
- one or more utility lines;
- one or more voids comprising cryogenic insulating material;
- a relief line for removing vapour from the one or more voids; and
- one or more vapour return lines,
wherein the relief line comprises a plurality of pores in fluid communication with the one or more voids.

In an embodiment, said cryogenic fluid transfer tunnel assembly does not comprise a recirculation line.

By bundling the cryogenic fluid carrier line and ancillary lines inside the same lining jacket, and optionally by omitting a recirculation line, it is possible to significantly reduce the outer diameter of the cryogenic fluid transfer tunnel as defined by the lining jacket. The outer diameter may be less than 2 m. Such cryogenic fluid transfer tunnels can be installed by trenchless installation methods which can lay the lining jacket and associated lines underneath the surface of the earth i.e. underground if on-shore or beneath the sea bed if off-shore.

In addition, the present invention provides a method of installing a cryogenic fluid transfer tunnel according to the first aspect by a trenchless installation method selected from the group comprising microtunnelling and horizontal direct drilling.

Laying the transfer tunnel by trenchless techniques minimises overgound disruption of the local populace and environment to the underground (or sea-bed) entry and exit points of the transfer tunnel during installation, rather than producing surface disruption along the entire length of the tunnel. Also, by laying the tunnel underground, a more protected environment for the cryogenic fluid carrier line is provided, particularly compared to a line running along the sea bed, while also reducing the hazard which such a carrier tunnel may represent were it to be laid at surface level. The requirement to lay the line from a barge or crane onto the sea bed is also dispensed with. This can be a delicate operation, which if carried out incorrectly may damage the cryogenic fluid carrier line, and particularly the thermal insulation of such a line. It will also be apparent that the trestle which normally supports a cryogenic fluid carrier line and ancillary lines can also be eliminated. Furthermore, laying the transfer tunnel beneath the sea bed may provide significant CAPEX reductions because wave protection such as breakwaters will not be required.

In a further aspect, the present invention provides a method of cooling a cryogenic fluid carrier line in a cryogenic fluid transfer tunnel as described herein comprising at least the steps of:
providing a cryogenic fluid carrier line with liquid cryogenic fluid;
allowing a portion of the liquid cryogenic fluid in the cryogenic fluid carrier line to evaporate, thereby cooling the cryogenic fluid carrier line, and producing a vapour space comprising gaseous cryogenic fluid along the cryogenic fluid carrier line;
storing and optionally cooling a part of the gaseous cryogenic fluid; and
passing the stored and optionally cooled gaseous cryogenic fluid through the vapour return line and along the cryogenic fluid carrier line via a connecting line, thereby cooling the cryogenic fluid carrier line.

In a still further aspect, the present invention provides the use of a cryogenic transfer tunnel assembly according to the first aspect in transporting LNG between one or both of a LNG import terminal and a LNG regasification facility and a LNG liquefaction facility and a LNG export terminal.

Embodiments of the present invention will now be described by way of example only and with reference to the accompanying non-limited drawings in which:
Figure 1 shows a side-elevation in cross-section of a jettyhead and a storage terminal connected via a tunnel according to the present invention;
Figure 2 shows a side-elevation in cross-section of a jettyhead and a storage terminal connected via a tunnel according to the present invention;
Figure 3 shows a perspective view of a cross-section of a cryogenic fluid transfer tunnel according to an embodiment of the invention;
Figure 4 shows a cross-section of a cryogenic fluid transfer tunnel according to another embodiment of the invention;
Figure 5 shows a cross section of yet another embodiment of the tunnel which is not part of the present invention; and
Figure 6 shows a cross-section of a tunnel according to an embodiment of the present invention.

As discussed above, it is often desirable to liquefy hydrocarbon compositions, such as natural gas, at a liquefaction facility, in order to store and transport it, very often over long distances, as a liquid. The liquefied natural gas can then be regasified at the desired destination at a regasification facility, and passed, under pressure, to a gas network.

The liquefaction facility and the regasification facility may be separated by large distances, such as many hundreds, if not thousands of kilometres. It is not economic to lay cryogenic fluid carrier lines over such distances because of the cost involved in installing and operating such lines, particularly at the cryogenic temperatures required to maintain LNG in a liquid state. It is therefore common to have a LNG export terminal in the vicinity of the liquefaction facility, from which the LNG can be loaded onto a LNG carrier vessel and transported, normally by sea, to a corresponding LNG import terminal which can offload the LNG from a LNG carrier vessel and supply this to the regasification facility.

The cryogenic fluid transfer tunnel described herein and its method of installation and start-up are of particular use in connecting such terminals and facilities.

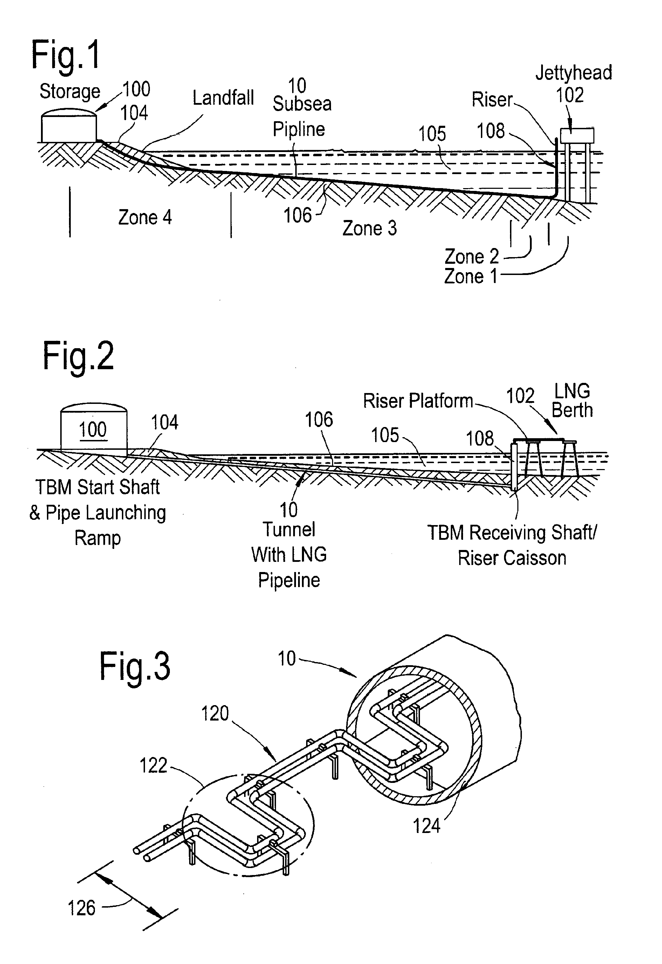

Figure 1 shows a storage facility 100 which is connected to a jetty 102 via a cryogenic fluid transfer tunnel 10 according to the present invention. The LNG storage facility 100 is located on land 104 and the jetty 102 is located off-shore, typically in sea 105. The tunnel 10 is located on the seabed 106 and consequently resembles a subsea pipeline. For protection, the tunnel may be buried in a trench or may be covered with a protective layer (not shown). At the jetty end thereof, the tunnel 10 is connected to the jetty via riser 108. Cargo carriers can berth at the jetty to load or offload cargo.

Figure 2 shows the on-land storage facility 100 which is connected to the jetty 102 via the tunnel 10, wherein the tunnel extends underground. I.e., the tunnel 10 is dug through the rock under the seabed 106.

Figure 3 shows an embodiment of the cryogenic fluid transfer tunnel 10, wherein a conventional stainless steel LNG pipeline 120 with expansion loops 122 (see explanation below) with a conventional insulation system is considered. The pipeline 120 is arranged inside a dry tunnel 124. The expansion loops, which are made of the same material as the LNG pipeline, provide flexibility to the pipeline to accommodate contraction and expansion due to fluctuations in temperature. For instance, for a pipeline of about 1 km, a contraction of 3 m is expected for a decrease in temperature from 25 degree Celsius (room temperature) to -160 degree Celsius (the temperature of LNG at 1 bar). I.e., during cool down the LNG pipeline shortens and the expansion loops 122 are provided to accommodate the shrinkage. To insulate the pipeline 120, multiple layers of PIR (Polyisocyanurate) and/or PUR (Polyurethane) insulation material can be used in combination with generally two vapour barriers and external cladding to provide mechanical protection.

Theoretically, there is no limit for maximum spacing between two expansion loops 122. However, the pipeline 120 is arranged on pipe supports 126. Some of the pipe supports 126 are fixed to the pipeline, so no movement is possible, and other pipe supports allow one axis of movement, in the direction of the pipeline.

Another aspect of the expansion loop is the width 126 thereof. With greater spacing between respective expansion loops, the greater the movement at the corners of the expansion loop and hence the larger the loop required in order to limit the required rotation to maintain stress at these locations within suitable limits.

In principle, the greater the distance between subsequent expansion loops 122, the wider the expansion loops are. Conversely, a short distance between loops results in smaller expansion loop. However, there is a limitation on this. The minimum size that a loop can physically be made that still provides movement is approximately 4-times the pipe diameter. Therefore, for a pipe allowing transfer of LNG at a rate of 10,000 m3 per hour, a pipeline diameter of about 1 m (40 inch) would be required. If so, the dry tunnel 124 would have an inner diameter of for instance 7 m. In addition, the dry tunnel 124 is maintained in a dry condition.

The embodiment of Figure 3 has the advantage that construction is straightforward and access to the pipeline is possible.

As an alternative, the expansion loops 122 may have a different form, compared to the substantially rectangular form shown in Figure 3. For instance, the expansion loops 122 may be curved. Herein, the expansion loops will provide a series of interconnected shallow loops or bends. This curved expansion loop which lies in a horizontal plane can minimise the inner diameter of the dry tunnel 124. One such curve may for instance have a width of up to 2.3 m. In this case, the pipeline 120 can comprise 50 % straight pipeline and 50% curved pipiline (including 45° elbows). For a reference LNG transfer condition of 10,000 m3 LNG per hour, the outer diameter of the pipeline 120 would be about 1.6 m and the inner diameter of the dry tunnel 124 would be about 5.5 m.

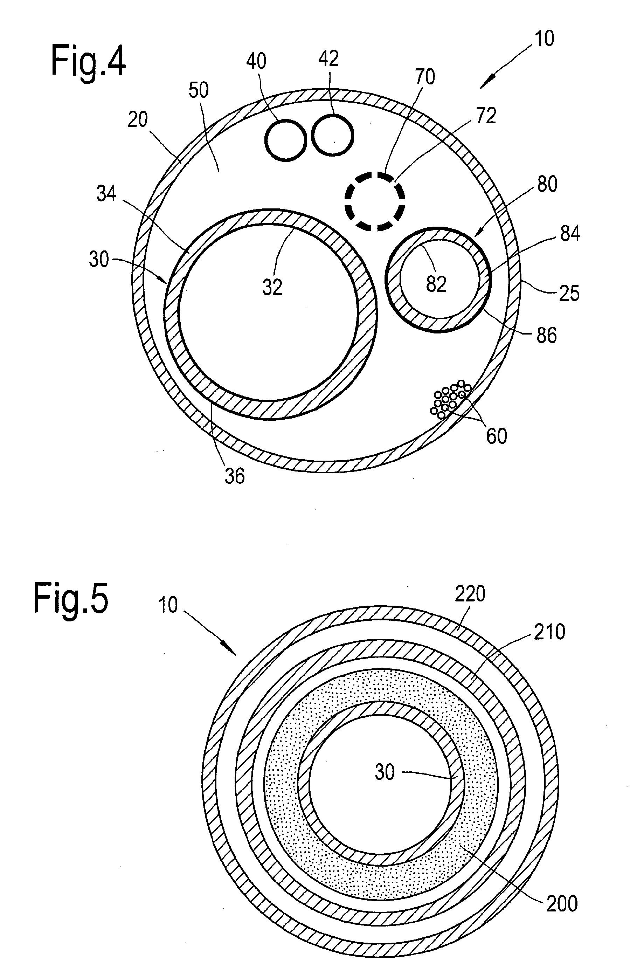

Figure 4 shows a cross-section of a cryogenic fluid transfer tunnel 10. The cryogenic fluid transfer tunnel 10 comprises a lining jacket 20 which comprises within a cryogenic fluid carrier line 30, one or more utility lines 40, 42, one or more voids 50 comprising insulating material 60, one or more relief lines 70 for removing vapour from at least one of the one or more voids 50, and one or more vapour return lines 80. These lines are not shown to scale in Figure 4.

The lining jacket 20 should provide both protection of the internal lines from the external, particularly underground, environment and also provide containment of the internal lines and their contents. The lining jacket 20 may be formed of concrete, such as reinforced concrete or steel, such as carbon steel. The outer perimeter 25 of lining jacket 20 defines the outer surface of the cryogenic fluid transfer tunnel 10.

In the embodiment shown in Figure 4 the lining jacket 20 is substantially circular in cross-section. As used herein, the term 'cross-section' is a section of the cryogenic fluid transfer tunnel 10 taken perpendicular to the central axis located along the largest dimension of the transfer tunnel 10.

The lining jacket may be provided in other shapes, although those of circular cross-section are preferred from the point of view of the trenchless installation techniques which may be employed.

Whatever the shape of the cross-section of the transfer tunnel 10, the cross-section may have a largest dimension of ≤ 4 m, or preferably ≤ 4 m, for instance in the range of from 1.5 to 2 m. In the embodiment shown in Figure 4, the largest dimension of the cross-section will be the length of a line from outer perimeter 25 to outer perimeter 25 passing through the central axis of the transfer tunnel 10 i.e. the diameter of the cross-section of the lining jacket 25 perpendicular to the central axis.

The lining jacket 20 surrounds the cryogenic fluid carrier line 30 and ancillary lines and services. The cryogenic fluid carrier line 30 carries the cryogenic fluid. The cryogenic fluid is typically substantially liquid, such as LNG.

The cryogenic fluid carrier line 30 has an inner wall 32 made from a material appropriate for cryogenic service, such as a material selected from the group comprising 9% nickel steel, stainless steel such as SS 304L stainless steel, cryogenic plastic and FeNi36 and related alloys (also known by the trade name INVAR).

The cryogenic plastic used for the inner wall 32 may include a plastic composite material comprising a plastic matrix material reinforced by a reinforcer, wherein the composite material has a tensile Young's modulus of less than 50 GPa as determined according to DIN EN ISO 527 at atmospheric conditions and/or a tensile strain of 5% or less at ambient conditions. A suitable plastic composite material is for instance disclosed in WO-2008/068303, which is for this purpose included herein by reference.

Typically, the cryogenic fluid carrier line may be circular in cross-section and may have an external diameter in the range of from 75 to 125 cm, or in the range of 90 to 110 cm.

In one embodiment, the cryogenic fluid carrier line 30 comprises a material having a linear coefficient of thermal expansion of less than 2.5 × 10⁻⁶ K⁻¹, more typically less than 2.0 × 10⁻⁶ K⁻¹ (from -180 to 0 °C). Appropriate materials include the FeNi36 and related alloys. Alternatively, the inner wall may comprise, or may be entirely made of, Forming the cryogenic fluid carrier line from a material having such a low linear coefficient of thermal expansion means that it is not necessary to incorporate expansion loops in the cryogenic fluid carrier line 30 to compensate for changes in the dimensions of the carrier line as a result of temperature changes. For instance, when the cryogenic fluid transfer tunnel 10 is dormant in between loading or off-loading operations, the cryogenic fluid carrier line 30 may increase in temperature as it begins to equilibrate with the external environment. However, in use, the temperature of the cryogenic fluid carrier line 30 may lower significantly, for instance to -160 °C or below when LNG is to be transferred. Consequently, if steps are not taken to compensate for these temperature fluctuations, it would not be possible to provide a cryogenic fluid supply tunnel 10 with a cross-sectional longest dimension of ≤ 2 m.

The cryogenic fluid carrier line may be surrounded by a layer of dedicated cryogenic insulation (34) such as aerogel or izoflex thermal insulation. The layer of dedicated cryogenic insulation may have a thickness in the range of about 0.5 to 15.0 cm.

The inner wall 32 and/or and the isolation layer 34 may be comprised within a protective outer wall 36. The outer wall 36 for instance comprises a carbon steel pipe.

One or more vapour return lines 80 are also present inside the lining jacket 20. The vapour return line can transfer gas, typically boil off gas such as natural gas, from carrier vessel to the liquefaction or regasification facility. The boil off gas can arise from the evaporation of the liquefied cryogenic fluid, for instance in the storage tanks and associated pipework of the carrier vessel.

The temperature of the boil off gas may still be at or near cryogenic temperatures. The boil off gas can be compressed at the import or export terminal and transferred to the liquefaction or regasification facility along the vapour return line 80. Thus, in the embodiment in which the cryogenic fluid transfer tunnel connects a liquefaction facility with an export terminal, the flow of gas in the vapour return line will be in the opposite direction from the flow of cryogenic fluid in the cryogenic fluid carrier line. In the embodiment in which the cryogenic fluid transfer tunnel connects an import terminal with a gasification facility, the flow of gas in the vapour return line and the cryogenic fluid in the cryogenic fluid transfer tunnel will be in the same direction (i.e. from the import terminal to the regasification facility).

The vapour return line for instance has an inner diameter in the range of from 50 to 70 cm, for instance approximately 60 cm.

As a result of the cryogenic temperatures at which the vapour return line 80 may operate, the material for an inner wall 82 of the vapour return line may be selected from those discussed for the cryogenic fluid carrier line 30. Furthermore, the inner wall 82 of the vapour return line may be provided with a surrounding layer 84 of dedicated thermal insulation and/or be provided in a pipe-in-pipe configuration as discussed above for the cryogenic fluid carrier line 30. For instance the dedicated thermal insulation may be a layer of aerogel which may be surrounded by a carbon steel pipe 86.

One or more utility lines 40, 42 may also be located within the lining jacket 20. The utility lines 40, 42 may comprise one of more of the group selected from one or more nitrogen lines, one or more distributed control system lines, one or more power lines, one or more instrumentation lines and one or more signal cables. The power line can transmit electrical power from the liquefaction or regasification facility to the export or import terminal respectively, where for instance, it can be used to operate pumps and compressors and supply power to the carrier vessel while docked. The utility lines may be separate, or contained within the same utility line jacket. If separate, each utility line may have a diameter in the range of from 8 to 12 cm, more typically approximately 10 cm.

An annular space between the outer surfaces of lines 30, 40, 70 and 80 and the inner surface of lining jacket 20 comprises one or more voids 50. Typically the annular space will be at ambient pressure, although in some embodiments the annular space may be at less than ambient pressure. At least a portion of the one or more voids 50 may be occupied with cryogenic insulating material 60. The cryogenic insulating material may be selected from the group comprising an amorphous volcanic glass insulator such as perlite, an aerogel such as a silica aerogel and a foam, such as polyimide foam.

In the embodiment of Figure 4, a bulk fill particulate insulating material 60, such as perlite beads, is shown. However, the insulating material may instead be in another form, typically a woven or nonwoven structure such as a blanket or a porous foam. Whatever the form, it is important that the voids formed between (and/or within the insulating material if it is porous) are in fluid communication, so that any cryogenic fluid, such as liquefied cryogenic fluid or boil off gas which may leak into the annular space from one or both of the cryogenic fluid carrier line and vapour return line may be collected and removed from the annular space to prevent accumulation of flammable material.

The cryogenic fluid transfer tunnel 10 further comprises one or more relief lines 70 for removing vapour from at least one of the one or more voids 50. The relief line 70 is provided with a plurality of pores or perforations 72 which are permeable to the cryogenic fluid, such as LNG and natural gas vapour. More typically, the relief line 70 may be a perforated line. The relief line 70 may be composed of a material selected from the group comprising carbon steel, stainless steel, and plastic, such as high density polyethylene.

The pores of the relief line 70 should be in fluid communication with one or more of the voids 50 to allow removal of leaked cryogenic fluid from the voids. It is apparent that the one or more voids 50 should also be in fluid communication to allow the passage of any fluid in the annular space to the relief line. For instance, the annular space with a particulate cryogenic insulating material or a foam cryogenic insulating material in which the cells of the foam are interconnected.

The relief line 70 may be placed under reduced pressure compared to that of the voids in the annular space in order to promote the removal of any leaked fluid. For instance, the relief line may be connected to a vacuum pump at one end of the tunnel for safe disposal.

The cryogenic fluid transfer tunnel 10 need not comprise a recirculation line for transferring cryogenic fluid, particularly LNG, in an opposite flow direction from that of the flow of cryogenic fluid in the cryogenic fluid carrier line 30. A recirculation line is conventionally present to allow the cooling of the cryogenic fluid carrier line to its operating temperature. For instance, cryogenic fluid, such as LNG, may be pumped along the cryogenic fluid carrier line from a liquefaction facility to an export terminal (or from an import terminal to a regasification facility) in order to cool the line to operational temperature by heat transfer between the line and the cryogenic fluid. Typically, a portion of the cryogenic fluid, which may be substantially in liquid form may be vaporised. At the termination of the cryogenic fluid carrier line, the cryogenic fluid may be passed to a gas/liquid separation vessel such as a knock-out drum. The liquid phase may be returned to the source of the cryogenic fluid (e.g. a liquefaction facility or carrier vessel) via a recirculation line. A recirculation line is not required in the cryogenic fluid carrier line disclosed herein.

The cryogenic fluid transfer tunnel 10 may further comprise a plurality of spacers to hold each of lines 30, 40, 70 and 80 in position in the annular space within lining jacket 20. Typically the spacers will allow fluid communication within the annular space from one side of a spacer to another and therefore do not segregate the annular space into fluid-isolated segments. The spacers may be comprised of steel, typically carbon steel or stainless steel.

The cryogenic fluid carrier line 30 may also be provided in a pipe-in-pipe configuration (Figure 5) in which the carrier line with a layer of dedicated cryogenic insulation 200 is enclosed in a carbon steel or stainless steel pipe 210. The carrier line 30 and dedicated cryogenic insulation 200 may also be enclosed in multiple layer of piping. In the embodiment of Figure 5, the cryogenic fluid carrier line 30 is enclosed in a first pipeline 210, which is surrounded by a second pipeline 220.

In a practical embodiment, the cryogenic fluid carrier line 30 comprises for instance FeNi36, FeNi9 or related alloys and/or may have an outer diameter of about 36 inch (90 cm). The first pipeline 210 is for instance made of stainless steel and/or may have an outer diameter of about 42 inch (107 cm). The second pipeline 220 is for instance made of carbon steel and/or may have an outer diameter of about 44 inch (112 cm).

The cryogenic fluid transfer tunnel 10 may be installed by a trenchless installation method selected from the group comprising microtunnelling and horizontal direct drilling.

Microtunnelling is useful for those situations in which the soil comprises sand, gravel, cohesive or rock types. Horizontal direct drilling may be used with cohesive and sand soil types.

When the trenchless installation method is microtunnelling, a jack pit is first excavated in the ground at one of the two sites which form either end of the cryogenic fluid transfer tunnel. Typically, when one end is on-shore and one end is off-shore, the jack pit will be excavated at the on-shore end of the cryogenic fluid transfer tunnel.

A thrust wall can then be constructed in the jack pit to provide reaction against which to jack. A pipe jack, such as a hydraulic jack, can then be installed in the jack pit positioned to achieve reaction against the thrust wall.

A tunnel from the jack pit to the site forming the other end of the cryogenic transfer tunnel can then be excavated, for instance using a remote controlled microtunneling machine. The tunnel should have a diameter of sufficient size to accommodate the lining jacket of the cryogenic fluid supply tunnel 10.

Lining jacket segments may then be pushed through the tunnel using the pipe jack. The lining jacket segments line the tunnel wall to provide the lining jacket of the cryogenic fluid transfer tunnel 10 and are therefore formed of the material used for the lining jacket already discussed. Typically, the lining jacket segments will be formed of concrete, such as reinforced concrete. Guide rails may be positioned in the thrust pit to ensure the correct alignment of the pipe jack and lining jacket segments.

The cryogenic fluid carrier line 30, one or more utility lines 40, one or more relief lines 70, one or more vapour return lines 80 and cryogenic insulating material 60 can then be fed inside the lining jacket 20 of the tunnel. All said lines may be fed inside the jacket at the same time.

It may be necessary to install intermediate jacking stations along the length of the tunnel should the jacking forces required to move the lining jacket 20 segments along the length of the installed pipeline be exceeded due to friction between the outer surface of the lining jacket 20 segments and the earth forming the walls of the excavated tunnel. Such intermediate jacking stations can reduce and distribute the jacking forces away from the pipe jack and thrust wall.

In an alternative embodiment, the trenchless installation method for the cryogenic fluid transfer tunnel 10 described herein may be horizontal direct drilling.

A subsurface pilot borehole between the two sites to form either end of the cryogenic fluid transfer tunnel 10 is first drilled. Typically, when one end of the tunnel is on-shore and one end is off-shore, the drilling is started from the on-shore site, although the drilling can be carried out from an off-shore end from a suitable drill rig if required. The drilling may be initiated from a pilot borehole of small diameter. The direction of the pilot borehole should be carefully controlled to follow the route of the cryogenic fluid transfer tunnel 10.

The pilot borehole may then be reamed, typically in one or more steps, to increase the diameter of the borehole to at least the outer diameter of the cryogenic fluid transfer tunnel to provide a preformed hole.

The cryogenic fluid transfer tunnel 10, which typically comprises a steel lining jacket, may then be pulled through the preformed hole from one of the two sites to the other site. This can be achieved providing the cryogenic fluid transfer tunnel with a towhead and pulling the tunnel through the preformed hole. Typically, drilling fluid may be retained in the preformed hole to protect the tunnel 10. The cryogenic fluid transfer tunnel 10 may be pulled through the preformed hole from an off-shore end of the tunnel, for instance by a jack-up platform.

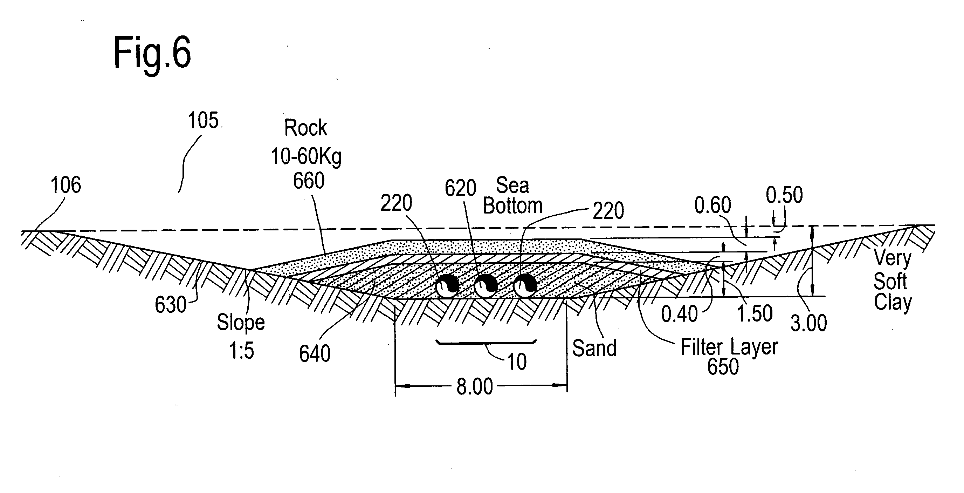

As shown in Figure 6, the cryogenic fluid transfer tunnel of the invention may comprise an assembly of two, three or more smaller tunnels. Herein, each tunnel may use the pipe-in-pipe configuration as shown in Figure 5. The basic method of installation would be to drill small diameter tunnels, for instance of about 1.5m to 2m inner diameter. The pipelines can be prefabricated on land. Upon completion of the tunnels, the pipelines 220 would then be pulled through the respective tunnel and connected to a riser at the island berth.

The size and number of tunnels required would depend on the functionality required in the loading lines, for example, would recirculation of LNG be required to minimise boil-off, would fire water be provided at the island berth using sea water, or would fresh water be required to be piped to the jetty. For instance, two tunnels can be provided: One pipe-in-pipe cryogenic fluid carrier line 30 within pipe 220 for transfer of LNG and a second pipeline 620 housing the utilities line and possibly the vapour return line. In a preferred embodiment, the assembly comprises three tunnels, including two pipelines 220 for LNG transfer (Figure 6).

Advantages of this embodiment include the absence of expansion loops, and pipes can be pulled through the tunnels, making installation easier.

As shown in Figure 6, the pipelines 220 and 620 may alternatively be buried in a trench 630 in the seabed 106. The pipelines are arranged in the trench, and are thereafter covered with a number of protective layers. The protective layers may include one or more of a sand layer 640, a filter layer 650, and a layer of rock 660. The protective layers provide protection against dragging anchors, fishing nets, wave action and scour. The installation method could include prefabrication of the pipelines 220, 620 and launching from shore, or the pipelines can be fabricated on a barge and lowered directly into the preformed trench 630.

Using a trench rather than drilling tunnels has the additional advantage of a shorter construction schedule and cost savings.

In a further embodiment, a method of starting-up a cryogenic fluid transfer tunnel 10 as described herein is disclosed. In the present context, the terms 'starting-up' and 'start-up' relate to the transition of the tunnel from a holding state to a loading or off-loading state. Typically, during the holding state there is no or no appreciable flow of liquid cryogenic fluid in the cryogenic fluid carrier line 30 in the direction of loading or off-loading i.e. from a liquefaction facility to an export terminal (i.e. in a loading operation) or from an import terminal to a regasification facility (i.e. in an off-loading operation). Typically, during the loading or off-loading state there is a flow of liquid cryogenic fluid in the cryogenic fluid carrier line 30 in the direction of loading or off-loading.

In a first step, relief line 70 is depressurised to a pressure less than that of the annular space i.e. at least one of the one or more voids 50 which are in fluid communication with the relief line 70 in the cryogenic fluid transfer tunnel 10.

The cryogenic fluid carrier line 30 can then be cooled by passing a cooling fluid through the line to provide a cooled cryogenic fluid carrier line. The cooling fluid may be the liquefied cryogenic fluid itself, or gaseous cryogenic fluid at or near cryogenic temperature, such at the liquefaction temperature of the cryogenic fluid.

The conditions within the cryogenic fluid transfer tunnel 10 can be monitored from one or more sensors in the one or more utility lines 40. The sensors may, for instance, monitor one or more of the group comprising the temperature of the cryogenic fluid carrier line 30, the composition of any gas in the annular space, for instance in the one or more voids 50 and the temperature of the vapour return line 80.

When the sensor indicates that it is acceptable to do so, for instance when the temperature of the cryogenic fluid carrier line is at or below the liquefaction temperature of the cryogenic fluid, the cryogenic fluid can be pumped through the cooled cryogenic fluid carrier line, typically from a cryogenic fluid storage tank in the liquefaction facility or carrier vessel to an export terminal or regasification facility respectively.

After the loading or off-loading operation is complete, the cryogenic fluid transfer tunnel 10 may be returned to a holding state. During the holding state, the cryogenic temperatures may be maintained in the cryogenic fluid carrier line.

In a further embodiment, a method of cooling a cryogenic fluid carrier line in a cryogenic fluid transfer tunnel as disclosed herein is disclosed.

In a first step, the cryogenic fluid carrier line is provided with liquid cryogenic fluid. This may be achieved as a result of a loading or unloading operation.

A portion of the liquid cryogenic fluid in the cryogenic fluid carrier line 30 may be allowed to heat up and boil off, thereby cooling the cryogenic fluid carrier line, to provide a vapour space in the cryogenic fluid carrier line 30. The vapour space will comprise gaseous cryogenic fluid (boil off gas).

The gaseous cryogenic fluid from the carrier line 30 can be stored, for instance in the vapour space of a cryogenic fluid storage tank, typically at the liquefaction or gasification facility.

Once sufficient liquid cryogenic fluid has evaporated to create a vapour space along the cryogenic fluid carrier line 30, gaseous cryogenic fluid from storage, such as the vapour space of the storage tank, can be passed along the vapour return line 80. Typically the gaseous cryogenic fluid may be near (i.e. slightly above) cryogenic temperature, that is the temperature required to maintain the cryogenic fluid in a liquid state. If necessary this may be cooled to near cryogenic temperature, for example by passage through a heat exchanger where it can be cooled against a liquefied cryogenic fluid stream, for instance from the liquefaction facility or a cryogenic fluid storage tank.

At or near the end of the vapour return line 80, typically at the import or export terminal end, a connection line with pressure reducing means, such as a valve, can be made to the cryogenic fluid carrier line 30. The pressure reducing means may be adjusted to allow the gaseous cryogenic fluid near cryogenic temperature from the vapour return line 80 to enter the cryogenic fluid carrier line 30 and pass along its length to cool it. This process will keep the carrier line 30 sufficiently cold to avoid any thermal expansion or any major delay in cooling the carrier line in preparation for the next transfer of cryogenic fluid.

During this operation, the flow of gaseous cryogenic fluid near cryogenic temperature along the vapour return line 80 may be in the opposite direction from the flow during loading or off-loading of a carrier vessel, when the gaseous cryogenic fluid as boil off gas is transferred from the carrier vessel to the liquefaction or regasification facility.

In an alternative embodiment disclosed herein, the cryogenic fluid carrier line may be maintained filled with cryogenic liquid at all times. Gaseous cryogenic fluid generated in the carrier line may be sent to the vapour return line. In such an embodiment, the cryogenic fluid carrier line is in fluid communication with the vapour return line, for instance via a gas/liquid separator and/or pressure reducing means, such as a valve.

For instance, the cryogenic fluid from the cryogenic fluid carrier line could be sent to a gas/liquid separation vessel, from which the gaseous cryogenic fluid is send to the vapour return line.

The gaseous cryogenic fluid from the vapour return line can then be used for power generation or sent to a boil off gas compressor where it is converted back into a liquid. This embodiment is of particular use when the cryogenic fluid carrier line connects a liquefaction facility to an export terminal.

The present invention is not limited to the embodiments described above and can be carried out in various ways within the scope of the appended claims.

## Claims

1. A cryogenic fluid transfer tunnel assembly (10) comprising a lining jacket (20, 120, 210, 220) comprising within:
- a cryogenic fluid carrier line (30); and
- one or more voids (50) comprising cryogenic insulating material (60, 200), wherein the lining jacket (20, 120) further comprises within:
- one or more utility lines (40);
- one or more relief lines (70) for removing vapour from the one or more voids (50); and
- one or more vapour return lines (80), **characterized in that** the relief line (70) comprises a plurality of pores in fluid communication with the one or more voids (50).

2. The cryogenic fluid transfer tunnel assembly (10) of claim 1, wherein the lining jacket (20, 120, 220) has an outer diameter of ≤2 m.

3. The cryogenic fluid transfer tunnel assembly (10) of claim 1, further comprising a connection line with pressure reducing means, between the cryogenic fluid carrier line (30) and at least one of the one or more vapour return lines (80).

4. The cryogenic fluid transfer tunnel assembly (10) of any of the preceding claims wherein the cryogenic fluid carrier line (30) comprises a material having a linear coefficient of thermal expansion of less than 2.5 × 10⁻⁶ K⁻¹, typically FeNi36.

5. The cryogenic fluid transfer tunnel assembly (10) of claim 4, wherein the cryogenic fluid carrier line (30) does not comprise any expansion loops.

6. The cryogenic fluid transfer tunnel assembly (10) of any of the preceding claims wherein the lining jacket (20) comprises concrete or steel.

7. The cryogenic fluid transfer tunnel assembly (10) of any of the preceding claims wherein the one or more utility lines (40) comprise one of more of the group selected from nitrogen, distributed control system, power, signal and instrumentation lines.

8. The cryogenic fluid transfer tunnel assembly (10) of claim 7, wherein the instrumentation lines comprise one or more sensors, such as one or more of the group comprising temperature, pressure and gas sensors.

9. The cryogenic fluid transfer tunnel assembly (10) of any of the preceding claims wherein the insulating material (70) comprises one of more of perlite and aerogel.

10. The cryogenic fluid transfer tunnel assembly (10) of any of the preceding claims wherein the cryogenic fluid is liquefied natural gas (LNG).

11. A method of cooling a cryogenic fluid carrier line (30) in a cryogenic fluid transfer tunnel assembly (10) according to any of claims 1 to 10, comprising the steps of:
- providing a cryogenic fluid carrier line (30) with liquid cryogenic fluid;
- allowing a portion of the liquid cryogenic fluid in the cryogenic fluid carrier line (30) to evaporate, thereby cooling the cryogenic fluid carrier line, and producing a vapour space comprising gaseous cryogenic fluid along the cryogenic fluid carrier line (30); storing and optionally cooling a part of the gaseous cryogenic fluid; and
- passing the stored and optionally cooled gaseous cryogenic fluid through the vapour return line (80) and along the cryogenic fluid carrier line (30) via a connecting line, thereby cooling the cryogenic fluid carrier line (30).

12. Use of a cryogenic fluid transfer tunnel assembly according to any one of claims 1 to 10 in transporting LNG between one or both of a LNG import terminal and a LNG regasification facility and a LNG liquefaction facility and a LNG export terminal.

## Patentansprüche

1. Transfertunnelanordnung für kryogenes Fluid (10), umfassend eine Leitungs-Ummantelung (20, 120, 210, 220), umfassend:
- eine Transportleitung für kryogenes Fluid (30); und
- einen oder mehrere Hohlräume (50), umfassend kryogenes Isoliermaterial (60, 200), wobei die Leitungs-Ummantelung (20, 120) darin ferner umfasst:
- eine oder mehrere Versorgungsleitungen (40);
- eine oder mehrere Entlastungsleitungen (70) zum Entfernen von Dampf aus dem einen oder den mehreren Hohlräumen (50); und
- eine oder mehrere Dampf-Rückführleitungen (80), **dadurch gekennzeichnet, dass** die Entlastungsleitung (70) eine Vielzahl an Poren in Fluidverbindung mit dem einen oder den mehreren Hohlräumen (50) umfasst.

2. Transfertunnelanordnung für kryogenes Fluid (10) nach Anspruch 1, wobei die Leitungs-Ummantelung (20, 120, 220) einen Außendurchmesser ≤ 2 m hat.

3. Transfertunnelanordnung für kryogenes Fluid (10) nach Anspruch 1, die ferner eine Verbindungsleitung mit Mitteln zur Druckreduktion zwischen der Transportleitung für kryogenes Fluid (30) und wenigstens einer der einen oder mehreren Dampf-Rückführleitungen (80) umfasst.

4. Transfertunnelanordnung für kryogenes Fluid (10) nach einem der vorstehenden Ansprüche, wobei die Transportleitung für kryogenes Fluid (30) ein Material umfasst, welches einen linearen thermischen Ausdehnungskoeffizienten von weniger als 2,5 x 10⁻⁶ K⁻¹ besitzt, typischerweise FeNi36.

5. Transfertunnelanordnung für kryogenes Fluid (10) nach Anspruch 4, wobei die Transportleitung für kryogenes Fluid (30) keine Verlägerungsschleifen umfasst.

6. Transfertunnelanordnung für kryogenes Fluid (10) nach einem der vorstehenden Ansprüche, wobei die Leitungs-Ummantelung (20) Beton oder Stahl umfasst.

7. Transfertunnelanordnung für kryogenes Fluid (10) nach einem der vorstehenden Ansprüche, wobei die eine oder die mehreren Versorgungsleitungen (40) ein oder mehrere Elemente, ausgewählt aus der Gruppe Stickstoff-, Prozesssteuersystem-, Strom-, Signal- oder Instrumentenleitungen, umfasst.

8. Transfertunnelanordnung für kryogenes Fluid (10) nach Anspruch 7, wobei die Instrumentenleitungen einen oder mehrere Sensoren, wie einen oder mehrere aus der Temperatur-, Druck- und Gassensoren umfassenden Gruppe, umfassen.

9. Transfertunnelanordnung für kryogenes Fluid (10) nach einem der vorstehenden Ansprüche, wobei das Isolationsmaterial (70) eines oder mehrere von Perlit und Aerogel umfasst.

10. Transfertunnelanordnung für kryogenes Fluid (10) nach einem der vorstehenden Ansprüche, wobei das kryogene Fluid verflüssigtes Erdgas ist (LNG).

11. Verfahren zur Kühlung einer Transportleitung für kryogenes Fluid (30) in einer Transfertunnelanordnung für kryogenes Fluid (10) nach einem der Ansprüche 1 bis 10, umfassend die Schritte:
- Bereitstellen einer Transportleitung für kryogenes Fluid (30) mit flüssigem kryogenem Fluid;
- Zulassen der Verdampfung von einem Teil des flüssigen kryogenen Fluids in der Transportleitung für kryogenes Fluid (30), wobei die Transportleitung für kryogenes Fluid gekühlt wird, und Erzeugen eines Dampfraumes umfassend gasförmiges kryogenes Fluid entlang der Transportleitung für kryogenes Fluid (30);
Lagern und wahlweise Kühlen von einem Teil des gasförmigen kryogenen Fluids; und
- Leiten des gespeicherten und wahlweise gekühlten gasförmigen kryogenen Fluids durch die Dampf-Rückführleitung (80) und entlang der Transportleitung für kryogenes Fluid (30) über eine Verbindungsleitung, wodurch die Transportleitung für kryogenes Fluid (30) gekühlt wird.

12. Verwendung einer Transfertunnelanordnung für kryogenes Fluid nach einem der Ansprüche 1 bis 10 zum Transportieren von LNG zwischen einem oder beiden, einem LNG-Importterminal und einer LNG-Rückvergasungsanlage und einer LNG-Verflüssigungsanlage und einem LNG-Exportterminal.

## Revendications

1. Ensemble (10) de tunnel pour transfert de fluides cryogéniques comprenant une enveloppe de doublure (20, 120, 210, 220) comprenant en son sein :
- une branche (30) de transport de fluide cryogénique; et
- un ou plusieurs vides (50) comprenant un matériau d'isolation (60, 200) cryogénique, dans lequel l'enveloppe de doublure (20, 120) comprend en outre en son sein :
- une ou plusieurs branches d'utilité (40) ;
- une ou plusieurs branches de relief (70) pour éliminer la vapeur de l'un ou plusieurs vides (50) ; et
- une ou plusieurs branches de retour de vapeur (80), **caractérisé en ce que** la branche de relief (70) comprend une pluralité de pores en communication fluide avec l'un ou plusieurs vides (50).

2. Ensemble (10) de tunnel pour transfert de fluides cryogéniques selon la revendication 1, dans lequel l'enveloppe de doublure (20, 120, 220) a un diamètre extérieur de ≤2 m.

3. Ensemble (10) de tunnel pour transfert de fluides cryogéniques selon la revendication 1, comprenant en outre une branche de connexion avec un moyen de réduction de la pression, entre la branche (30) de transport de fluide cryogénique et au moins une des une ou plusieurs branches de retour de vapeur (80).

4. Ensemble (10) de tunnel pour transfert de fluides cryogéniques selon l'une quelconque des revendications précédentes dans lequel la branche (30) de transport de fluide cryogénique comprend un matériau ayant un coefficient thermique d'expansion linéaire inférieur à 2.5 × 10⁻⁶ K⁻¹, typiquement FeNi36.

5. Ensemble (10) de tunnel pour transfert de fluides cryogéniques selon la revendication 4, dans lequel la branche (30) de transport de fluides cryogéniques ne comprend aucune boucle de dilatation.

6. Ensemble (10) de tunnel pour transfert de fluides cryogéniques selon l'une quelconque des revendications précédentes dans lequel l'enveloppe de doublure (20) comprend du béton ou de l'acier.

7. Ensemble (10) de tunnel pour transfert de fluides cryogéniques selon l'une quelconque des revendications précédentes dans lequel une ou plusieurs branches d'utilité (40) comprennent un ou plusieurs des groupes choisis parmi des branches d'azote, de systèmes de contrôle distribués, d'énergie, de signal et d'instrumentation.

8. Ensemble (10) de tunnel pour transfert de fluides cryogéniques (10) selon la revendication 7, dans lequel les branches d'instrumentation comprennent un ou plusieurs capteurs, tels qu'un ou plusieurs du groupe comprenant des capteurs de température, de pression et de gaz.

9. Ensemble (10) de tunnel pour transfert de fluides cryogéniques selon l'une quelconque des revendications précédentes, dans lequel le matériau isolant (70) comprend un ou plusieurs perlite et aérogel.

10. Ensemble (10) de tunnel pour transfert de fluides cryogéniques selon l'une des revendications précédentes dans lequel le fluide cryogénique est un gaz naturel liquéfié (GNL).

11. Méthode pour refroidir une branche (30) de transport de fluides cryogéniques dans un ensemble (10) de tunnel pour transfert de fluides cryogéniques selon l'une quelconque des revendications 1 à 10, comprenant les étapes de :
- fournir une branche (30) de transport de fluides cryogéniques en liquide cryogénique ;
- permettre à une portion du liquide cryogénique de la branche (30) de transport de fluides cryogéniques de s'évaporer, refroidissant ainsi la branche de transport de fluides cryogéniques, et produisant une espace de vapeur comprenant du fluide cryogénique gazeux le long de la branche (30) de transport de fluides cryogéniques; stockant et refroidissant optionnellement une partie du fluide cryogénique gazeux ; et
- faire passer le fluide cryogénique gazeux stocké et optionnellement refroidi à travers une branche (80) de retour de vapeur et le long de la branche (30) de transport de fluides cryogéniques via une branche de connexion, refroidissant ainsi la branche de transport de fluide cryogénique.

12. Utilisation d'un ensemble de tunnel pour transfert de fluides cryogéniques selon l'une quelconque des revendications 1 à 10 pour transporter le GNL entre un ou plusieurs terminaux d'import de GNL et une installation de regazéification de GNL et une installation de liquéfaction de GNL et un terminal d'export de GNL.
